Europäisches Patentamt

European Patent Office

Office européen des brevets

(11) Veröffentlichungsnummer: **0 394 728**
**A2**

(12) **EUROPÄISCHE PATENTANMELDUNG**

(21) Anmeldenummer: **90106683.7**

(22) Anmeldetag: **06.04.90**

(51) Int. Cl.5: **H04J 14/02, H04Q 11/00**

(30) Priorität: **22.04.89 DE 3913300**

(43) Veröffentlichungstag der Anmeldung:
**31.10.90 Patentblatt 90/44**

(84) Benannte Vertragsstaaten:
**AT BE CH DE DK ES FR GB IT LI NL SE**

(71) Anmelder: **Standard Elektrik Lorenz Aktiengesellschaft**
**Lorenzstrasse 10**
**D-7000 Stuttgart 40(DE)**

(84) **DE**

Anmelder: **ALCATEL N.V.**
**Strawinskylaan 341 (World Trade Center)**
**NL-1077 XX Amsterdam(NL)**

(84) **BE CH DK ES FR GB IT LI NL SE AT**

(72) Erfinder: **Fussgänger, Kurt, Dr.**
**Wunnensteinstrasse 20**
**D-7148 Remseck 3(DE)**

(74) Vertreter: **Kugler, Hermann, Dipl.-Phys. et al**
**Standard Elektrik Lorenz AG Patent- und**
**Lizenzwesen Postfach 30 09 29**
**D-7000 Stuttgart 30(DE)**

(54) Optisches Nachrichtenübertragungssystem für den Teilnehmeranschlussbereich.

(57) Das erfindungsgemaße System dient dazu, eine Vielzahl von breitbandigen Nachrichtensignalen, insbesondere Fernsehsignale, von einer Zentrale zu Teilnehmern zu verteilen und eine bidirektionale Übertragung von breit-oder schmalbandigen Signalen zwischen der Zentrale und den Teilnehmern zu ermöglichen. Eine Gruppe von Teilnehmern (Tln$_1$ bis Tln$_8$) hat eine in ihrer Nähe befindliche gemeinsame Vorfeldeinrichtung (20) und ist an diese Vorfeldeinrichtung über teilnehmerindividuelle Leitungen, vorzugsweise Lichtwellenleiter, angeschlossen. Zwischen der Zentrale und der Vorfeldeinrichtung verläuft ein einziger Lichtwellenleiter (1). In Richtung von der Zentrale zu den Teilnehmern werden die teilnehmerindividuellen Signale mit teilnehmerindividuellen Wellenlängen ($\lambda_1$ bis $\lambda_8$) und die zu verteilenden Signale als ein optisches Signal mit einer weiteren Wellenlänge ($\lambda_0$) im Wellenlängenmultiplex zur Vorfeldeinrichtung (20) übertragen, dort das die zu verteilenden Signale enthaltende optische Signal herausgetrennt und mit optischen Mitteln und teilnehmerindividuellen Leitungen, vorzugsweise Lichtwellenleitern (LK$_1$ bis LK$_8$), zu den Teilnehmern verteilt. Auch die teilnehmerindividuellen Signale werden in der Vorfeldeinrichtung in Einzelsignale aufgetrennt und über teilnehmerindividuelle Leitungen, insbesondere Lichtwellenleiter (LA$_1$ bis LA$_8$) zu den Teilnehmern übertragen. In der entgegengesetzten Richtung werden die von den Teilnehmern zur Zentrale zu sendenden Signale ebenfalls über teilnehmerindividuelle Lichtwellenleiter (LB$_1$ bis LB$_8$) mit teilnehmerindividuellen Wellenlängen ($\lambda_9$ bis $\lambda_{16}$) zur Vorfeldeinrichtung übertragen, dort zu einem optischen Multiplexsignal zusammengefaßt und über den Lichtwellenleiter (1) zur Zentrale übertragen. Eine geeignete Wahl der Wellenlängen ermöglicht eine einfache Multiplexbildung und Multiplexauflösung.

FIG.1

## Optisches Nachrichtenübertragungssystem für den Teilnehmeranschlußbereich

Die Erfindung betrifft ein optisches Nachrichtenübertragungssystem nach dem Oberbegriff des Patentanspruchs 1. Ein derartiges Nachrichtenübertragungssystem ist bekannt aus der EP-A2-0 164 652. Eine Verteilung von Nachrichtensignalen, z.B. Fernsehsignalen, von der Zentrale zu den Teilnehmern ist dort nicht vorgesehen. Nur bidirektionale Nachrichtendienste, auch Dialogdienste genannt, sollen über das System abgewickelt werden.

Wünschenswert wäre eine Lösung, bei der nicht nur bidirektionale, sondern auch unidirektionale Dienste, d.h. Verteildienste, abgewickelt werden können. Hierzu sind folgende Lösungen bekannt:

a) Die EP-B1-0 071 232 gibt die Lehre, für jeden Teilnehmer zwei Lichtwellenleiter zu verwenden: den einen für die Fernseh- und Rundfunkübertragung, also für die Verteildienste, und den anderen für die bidirektionalen Nachrichtendienste. Hierbei handelt es sich nicht um ein integriertes System, sondern um zwei voneinander unabhängige Systeme, und es besteht der Nachteil, daß insgesamt große Längen von Lichtwellenleitern erforderlich sind.

b) Aus "IEEE Journal on Selected Areas in Communications", VOL. SAC-4, NO. 4, Juli 1986, S. 551 bis S. 564, ist es bekannt (S. 554), ein System der eingangs genannten Art (Fig. 5 auf S. 554) dadurch zu einem diensteintegrierten System für Dialog- und Verteildienste zu erweitern, daß man die Signale zur Übertragung von Fernseh- und Rundfunkprogrammen durch Zeitmultiplexbildung zu den von der Zentrale zu den Teilnehmern zu übertragenden Signalen für die Dialogdienste hinzufügt und dadurch die Bitfolgefrequenz für diese Übertragungsrichtung erhöht. Diese Art der Integration erscheint unter wirtschaftlichen Gesichtspunkten sinnvoll, kann jedoch, wenn die Verteildienste und die Dialogdienste verschiedenen Betreibern zugeordnet sind, aus politischen oder rechtlichen Gründen unerwünscht sein.

Ein reines optisches Verteilsystem, das ebenso wie das eingangs genannte Dialogsystem eine passive optische Vorfeldeinrichtung hat, ist bekannt aus der DE-OS 32 20 817.

Abgesehen von der obengenannten Integration der Verteildienste in ein System zur Abwicklung der Dialogdienste durch Zeitmultiplexbildung und Erhöhung der Bitfolgefrequenz ist kein Vorschlag bekannt, wie man für den Teilnehmeranschlußbereich ein optisches Übertragungssystem schaffen kann, mit dem sowohl die Verteil- als auch die Dialogdienste abgewickelt werden können.

Es ist die Aufgabe der Erfindung, ein solches System anzugeben. Die Aufgabe wird wie in Patentanspruch 1 angegeben gelöst. Weiterbildungen ergeben sich aus den Unteransprüchen.

Die Erfindung wird nun anhand der Zeichnungen beispielsweise näher erläutert. Es zeigen:

Fig. 1 den Grundaufbau des erfindungsgemäßen Systems,

Fig. 2 ein Beispiel für die Lage der zu verwendenden teilnehmerindividuellen Wellenlängen, und

Fig. 3 eine Abwandlung des Systems nach Fig. 1 hinsichtlich der Übertragung zwischen der Vorfeldeinrichtung und den Teilnehmern.

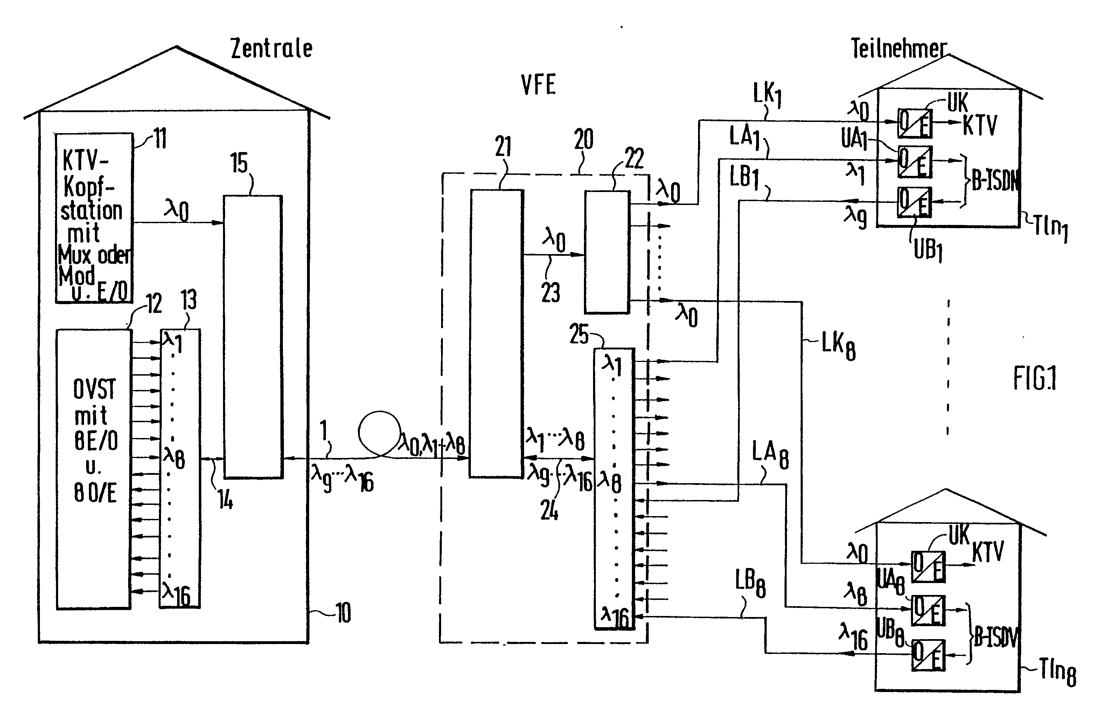

In Fig. 1 zeigt der linke Teil die in der Zentrale vorhandenen Einrichtungen, der rechte Teile eine Gruppe von Teilnehmern $Tln_1$ bis $Tln_8$ und der mittlere Teil eine Vorfeldeinrichtung, mit VFE abgekürzt. Mit dem eingangs genannten bekannten System hat diese Grund-Konfiguration gemeinsam, daß die Teilnehmer über individuelle Leitungen mit der Vorfeldeinrichtung verbunden sind und die Vorfeldeinrichtung über einen einzigen Lichtwellenleiter mit der Zentrale verbunden ist.

Sternkoppler oder Vorfeldeinrichtungen befinden sich in der Nähe einer Gruppe von Teilnehmern, was auch bedeuten kann, daß sie sich z.B. im Keller eines Mehrfamilienhauses befinden, wenn die Gruppe von Teilnehmern in einem Mehrfamilienhaus wohnt. Letzteres gilt vorzugsweise für aktive Vorfeldeinrichtungen.

Die Zentrale trägt das Bezugzeichen 10. Sie enthält eine sogenannte KTV-Kopfstation 11 (KTV = Kabelfernsehen), die an ihrem Ausgang ein optisches Signal mit einer Wellenlänge $\lambda_0$ abgibt. Dieses optische Signal enthält sämtliche zu den Teilnehmern zu verteilenden Fernseh- und Rundfunkprogramme, d.h., die KTV-Kopfstation umfaßt auch die Einrichtungen, die notwendig sind, um aus den elektrischen Fernseh- und Rundfunksignalen ein Zeit- oder Frequenzmultiplexsignal zu machen, das die Signale enthält, und dieses in ein optisches Signal mit der Wellenlänge $\lambda_0$ umzusetzen, also Multiplexer oder Modulatoren und einen Elektrisch-optisch-Wandler. Hierbei spielt es keine Rolle, ob die Signale als digitale Signale oder als analoge Signale übertragen werden.

Weiterhin gehören zur Zentrale 10 eine Ortsvermittlungsstelle 12, die an ihren Ausgängen die zu Teilnehmern zu übertragenden Signale abgibt und an ihren Eingängen die von den Teilnehmern empfangenen Signale erhält. Diese Signale sind für Teilnehmer, die mehrere Telekommunikationsdienste in Anspruch nehmen, Multiplexsignale, und die Ortsvermittlungsstelle enthält auch Einrichtungen, um die zu den Teilnehmern zu übertragenden elektrischen Multiplexsignale in optische Signale umzusetzen, und Einrichtungen, um die von den Teilnehmern empfangenen optischen Signale in elektrische Signale umzusetzen.

Im Beispiel ist dargestellt, daß die Ortsvermittlungsstelle acht optische Signale mit Wellenlängen $\lambda_1$ bis $\lambda_8$ für acht Teilnehmer an ihren Ausgängen abgibt und von diesen acht Teilnehmern insgesamt acht optische Signale mit Wellenlangen $\lambda_9$ bis $\lambda_{16}$ empfängt. Die Ortsvermittlungsstelle enthält also acht Elektrisch-optisch-Wandler und acht Optisch-elektrisch-Wandler für die Teilnehmer $Tln_1$ bis $Tln_8$.

Für andere Gruppen von Teilnehmern enthält sie auch jeweils solche Einrichtungen. Im Ausführungsbeispiel werden aber nur die eine Gruppe von Teilnehmern und die für diese vorhandenen Einrichtungen betrachtet.

Von der Ortsvermittlungsstelle 12 zu den Teilnehmern werden also, wie noch erläutert wird, die zu einer Gruppe von Teilnehmern zu übertragenden teilnehmerindividuellen Signale als optische Signale mit teilnehmerindividuellen Wellenlängen übertragen. Wie ebenfalls noch erläutert wird, werden die von der Gruppe von Teilnehmern zur Zentrale zu übertragenden teilnehmerindividuellen Signale ebenfalls als optische Signale mit teilnehmerindividuellen Wellenlängen übertragen. Auf diese Weise werden die bidirektionalen Kommunikationsdienste, auch Dialogdienste genannt, z.B. Fernsprechen, Datenübertragung, Bildfernsprechen, abgewickelt. Da für die Übertragung eine große Bandbreite zur Verfügung steht, ist das System auch für die bidirektionalen Telekommunikationsdienste des geplanten Fernmeldenetzes B-ISDN (Broadband-Integrated Services Digital Network) oder des "Integrierten Breitband-Fernmeldenetztes" (IBFN) geeignet.

Im Gegensatz zu den teilnehmerindividuellen Wellenlängen $\lambda_1$ bis $\lambda_{16}$ ist die Wellenlange $\lambda_0$ allen Teilnehmern gemeinsam, da alle Teilnehmer dasselbe optische Signal, d.h. dieselben Fernseh- und Rundfunksignale, empfangen sollen.

Zur Vereinfachung der Beschreibung wird im folgenden für sämtlichen Signale die Übertragungsrichtung von der Zentrale zu den Teilnehmern als Abwärtsrichtung und die Übertragungsrichtung von den Teilnehmern zur Zentrale als Aufwärtsrichtung bezeichnet.

. Die Übertragung in Abwärtsrichtung geschieht wie folgt: Ein optischer Multiplexer-Demultiplexer 13 faßt die in der Abwärtsrichtung zu übertragenden Signale mit den teilnehmerindividuellen Wellenlängen $\lambda_1$ bis $\lambda_8$ zu einem optischen Multiplexsignal zusammen und koppelt dieses auf einen einzigen Lichtwellenleiter 14, der mit einem weiteren optischen Multiplexer-Demultiplexer 15 verbunden ist. Derselbe Lichtwellenleiter 14 überträgt von dem Multiplexer-Demultiplexer 15 in Aufwärtsrichtung ein optisches Multiplexsignal, bestehend aus optischen Signalen mit den teilnehmerindividuellen Wellenlängen $\lambda_9$ bis $\lambda_{16}$, das der Multiplexer-Demultiplexer 13 in die einzelnen Signale zerlegt und jedes dieser Einzelsignale wie gezeigt auf einen Lichtwellenleiter gibt, über den es zu den Eingängen der Ortsvermittlungsstelle 12 gelangt. Der Multiplexer-Demultiplexer 13 ist ein an sich bekannter Gitter-Muldex für 16 Wellenlängen.

Der Multiplexer-Demultiplexer 15 faßt das von der Kopfstation 11 empfangene optische Signal mit der Wellenlänge $\lambda_0$ und das vom Lichtwellenleiter 14 empfangene optische Multiplexsignal, enthaltend die Signale mit den Wellenlängen $\lambda_1$ bis $\lambda_8$, zusammen und gibt es zur Übertragung in Abwärtsrichtung auf den die Zentrale mit der Vorfeldeinrichtung verbindenden Lichtwellenleiter 1. In Aufwärtsrichtung läßt er das von der Vorfeldeinrichtung empfangene Gemisch aus optischen Signalen mit den Wellenlängen $\lambda_9$ bis $\lambda_{16}$ zur weiteren Übertragung auf den Lichtwellenleiter 14 gelangen.

Die Vorfeldeinrichtung, mit dem Bezugszeichen 20 bezeichnet, enthält einen optischen Multiplexer-Demultiplexer 21, der aus dem von der Zentrale empfangenen optischen Multiplexsignal das Signal mit der Wellenlänge $\lambda_0$ heraustrennt und auf einen zu einer optischen Verteileinrichtung 22 führenden Lichtwellenleiter 23 gibt. Die optischen Signale mit den Wellenlängen $\lambda_1$ bis $\lambda_8$ gibt er auf einen Lichtwellenleiter 24, der sie zu einem Multiplexer-Demultiplexer 25 überträgt. Dieser Multiplexer-Demultiplexer 25 zerlegt das in Abwärtsrichtung übertragene optische Multiplexsignal in seine Einzelsignale mit den Wellenlängen $\lambda_1$ bis $\lambda_8$ und gibt diese an getrennten Ausgängen heraus, und er faßt die in Aufwärtsrichtung zu übertragenden optischen Signale mit teilnehmerindividuellen Wellenlängen $\lambda_9$ bis $\lambda_{16}$ zu einem Wellenlängenmultiplexsignal zusammen, das er auf den Lichtwellenleiter 24 gibt, der es zum Multiplexer-Demultiplexer 21 überträgt.

Das zu verteilende optische Signal mit der Wellenlänge $\lambda_0$ verteilt die optische Verteileinrichtung, im einfachsten Falle ein Sternkoppler, auf acht Ausgänge, und von jedem Ausgang führt ein Lichtwellenleiter $LK_1$ $LK_8$ zu einem der Teilnehmer $Tln_1$ bis $Tln_8$. Jeder der Teilnehmer enthält einen Optisch-elektrisch-Umsetzer UK, der das empfangene optische Signal mit der Wellenlänge $\lambda_0$ in das normgerechte elektrische KTV-Signal umsetzt. Jedes der in Abwärtsrichtung von der Vorfeldeinrichtung zu den Teilnehmern zu übertragenden Signale mit den teilnehmerindividuellen Wellenlängen $\lambda_1$ bis $\lambda_8$ wird vom entsprechenden Ausgang des Multiplexers-Demultiplexers 25 über einen teilnehmerindividuellen Lichtwellenleiter $LA_1$ bis $LA_8$ zu dem zugehörigen Teilnehmer übertragen und dort mit einem Optisch-elektrisch-Umsetzer $UA_1$ bis $UA_8$ in ein dem jeweiligen Teilnehmer zugeordnetes elektrisches Multiplexsignal, z.B. das im integrierten Netz B-ISDN in Abwärtsrichtung zu den Teilnehmern zu übertragende Signal, umgesetzt.

Für die Übertragung in Aufwärtsrichtung enthält jeder Teilnehmer einen Elektrisch-optisch-Umsetzer ($UB_1$ bis $UB_8$). Diese Umsetzer setzen das vom jeweiligen Teilnehmer zur Abwicklung der bidirektionalen Dienste zur Zentrale zu übertragende elektrische Signal in ein optisches Signal mit einer teilnehmerindividuellen Wellenlänge um, und von jedem Teilnehmer führt ein eigener Lichtwellenleiter zur Vorfeldeinrichtung 20. Die teilnehmerindividuellen Wellenlängen sind mit $\lambda_9$ bis $\lambda_{16}$ und die teilnehmerindividuellen Lichtwellenleiter für die Aufwärtsrichtung sind mit $LB_1$ bis $LB_8$ bezeichnet.

Die vorstehend genannten Multiplexer-Demultiplexer sind hinsichtlich ihrer Funktion und ihrer Realisierung für sich bekannt, so daß nach der gegebenen Erläuterung der Funktion eine Erläuterung der Realisierung entbehrlich ist.

Für die zu verwendenden Wellenlängen werden nachstehend zwei Ausführungsbeispiele: Tabelle 1 und Tabelle 2, gegeben.

Im einen liegt die Wellenlänge $\lambda_0$ bei 1500 nm und die Wellenlängen $\lambda_1$ bis $\lambda_6$ bei 1300 nm, und im anderen ist dies umgekehrt.

Tabelle 1

$\lambda_0$ = 1500 oder 1550 nm
$\lambda_1$ = 1273 nm
$\lambda_2$ = 1275 nm
$\lambda_3$ = 1277 nm
$\lambda_4$ = 1279 nm
$\lambda_5$ = 1281 nm
$\lambda_6$ = 1283 nm
$\lambda_7$ = 1285 nm
$\lambda_8$ = 1287 nm
$\lambda_9$ = 1313 nm
$\lambda_{10}$ = 1315 nm
$\lambda_{11}$ = 1317 nm
$\lambda_{12}$ = 1319 nm
$\lambda_{13}$ = 1321 nm
$\lambda_{14}$ = 1323 nm
$\lambda_{15}$ = 1325 nm
$\lambda_{16}$ = 1327 nm

Tabelle 2

$\lambda_0$ = 1300 nm
$\lambda_1$ = 1501 nm
$\lambda_2$ = 1503 nm
$\lambda_3$ = 1505 nm
$\lambda_4$ = 1507 nm
$\lambda_5$ = 1509 nm
$\lambda_6$ = 1511 nm
$\lambda_7$ = 1513 nm
$\lambda_8$ = 1515 nm

$\lambda_9$ = 1541 nm
$\lambda_{10}$ = 1543 nm
$\lambda_{11}$ = 1545 nm
$\lambda_{12}$ = 1547 nm
$\lambda_{13}$ = 1549 nm
$\lambda_{14}$ = 1551 nm
$\lambda_{15}$ = 1553 nm
$\lambda_{16}$ = 1555 nm

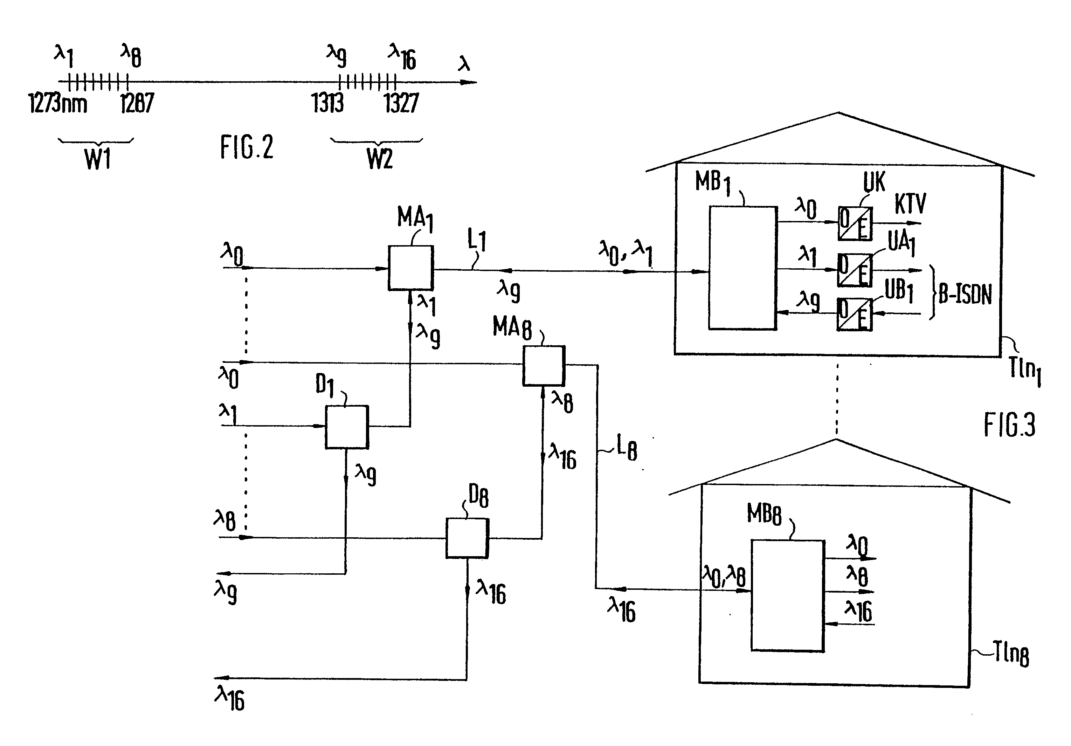

Die Lage der Wellenlangen $\lambda_1$ bis $\lambda_{16}$ gemäß dem Ausführungsbeispiel nach Tabelle 1 ist in Fig. 2 graphisch dargestellt. Hier wird deutlich sichtbar, daß die für die Übertragung in Abwärtsrichtung zu verwendenden Wellenlängen $\lambda_1$ bis $\lambda_8$ in geringem Abstand voneinander (nur 2 nm) in einem ersten Wellenlängenbereich W1 und die für die Aufwärtsrichtung zu verwendenden teilnehmerindividuellen Wellenlängen $\lambda_9$ bis $\lambda_{16}$ in einem zweiten Wellenlängenbereich W2 liegen und ebenfalls einen geringen Abstand voneinander haben. Als Abstand kann im allgemeinen 1 bis 5 nm gewählt werden. Bei kohärenter Übertragung kann er noch viel geringer sein, nämlich etwa um einen Faktor in der Größenordnung von 1000. Zwischen beiden Bereichen liegt ein vorgegebener deutlicher Abstand von 26 nm, im allgemeinen 20 bis 80 nm. Der gesamte Wellenlängenbereich von $\lambda_1$ bis $\lambda_{16}$ ist wiederum deutlich abgesetzt von der Wellenlänge $\lambda_0$ (1500 nm) (in Fig. 2 nicht gezeigt). Diese Eigenschaften hat auch das Ausführungsbeispiel nach Tabelle 2.

Den Ausführungsbeispielen liegt das Prinzip zugrunde, den Wellenlängenbereich, in dem die Wellenlänge $\lambda_0$ für die Verteildienste liegt, deutlich abzusetzen (ungefähr 200 nm Abstand) von dem Wellenlängenbereich, aus dem die teilnehmerindividuellen Wellenlängen gewählt werden, diese teilnehmerindividuellen Wellenlängen, getrennt nach Abwärts- und Aufwärtsrichtung in zwei Bereiche ($W_1$, $W_2$) zu legen, zwischen den auch ein deutlicher Abstand (26 nm) liegt, und die Wellenlängen in den einzelnen Bereichen sehr eng aufeinander folgen zu lassen.

Dadurch werden folgende Vorteile erreicht:

1. Durch einfache Multiplexer und Demultiplexer kann das optische Signal für die Verteildienste den Signalen für die Dialogdienste hinzugefügt und von diesen getrennt werden.

2. Bei allen Teilnehmern liegen die für die beiden Übertragungsrichtungen gewählten teilnehmerindividuellen Wellenlängen, die einem Teilnehmer zugeordnet sind, z.B. $\lambda_1$ und $\lambda_9$ oder $\lambda_8$ und $\lambda_{16}$, in einem einheitlichen Abstand, nämlich 40 nm, auseinander. Dadurch können, falls ein Multiplexen oder Demultiplexen der beiden einem Teilnehmer zugeordneten Wellenlängen vorgesehen ist, für alle Teilnehmer einheitliche Multiplexer-Demultiplexer, insbesondere z.B. dikroitische Kantenfilter oder wellenlängenselektive Faser-Schmelzkoppler, verwendet werden. Solche Multiplexer und Demultiplexer werden im Ausführungsbeispiel nach Fig. 3 noch gezeigt.

Die vorstehend erläuterte erfindungsgemäße Wahl der Wellenlängen ist, auch wenn nur die teilnehmerindividuellen Wellenlängen betrachtet werden, neu gegenüber dem Stand der Technik. Bei dem eingangs erwähnten bekannten System liegen die für eine Übertragungsrichtung verwendeten Wellenlängen (z.B. die mit den ungeradzahligen Indices) in großen Abständen auseinander, und dazwischen liegen die für die entgegengesetzte Richtung verwendeten Wellenlängen. Insgesamt wird ein Bereich von 1170 bis 1610 nm verwendet, so daß die bekannte Anordnung keine Möglichkeit bietet, in geeigneter Weise eine weitere Wellenlänge für die Verteildienste hinzuzunehmen.

Das Multiplexen und Demultiplexen von optischen Signalen, deren Wellenlängen sehr eng beieinander liegen, nämlich nur 2 nm, ist für sich bekannt aus "Electronics Letters", 17th March 1988, Vol. 24, No. 6, S. 344 bis 346. Die Wellenlängen für die beiden Übertragungsrichtungen liegen dort nicht in zwei aneinanderliegenden Bereichen.

Im folgenden werden einige Abwandlungen und Weiterbildungen der Erfindung erläutert.

Damit sichergestellt ist, daß kein Teilnehmer einen Anteil des für einen anderen Teilnehmer bestimmten Signals empfangen kann, können in der Vorfeldeinrichtung in die zu den Teilnehmern führenden Lichtwellenleiter oder in der Zentrale in die zur Ortsvermittlungsstelle führenden Lichtwellenleiter optische Schmalbandfilter eingefügt sein.

Falls die Vorfeldeinrichtung zu weit von den Teilnehmern entfernt ist, ist es möglich, daß der Pegel des bei den Teilnehmern empfangenen optischen Signals zu gering ist. Dann können der Vorfeldeinrichtung optische Verstärker für jedes zu einem Teilnehmer zu übertragende optische Signal vorhanden sein, oder die optischen Signale können in elektrische umgewandelt, elektrisch verstärkt und wieder in optische Signale umgewandelt werden. Die Vorfeldeinrichtung wird in diesen Fällen also von einer rein passiven optischen Einrichtung zu einer aktiven Einrichtung. Die Vorfeldeinrichtung kann jedoch auch passiv gehalten werden, wenn Faserverstärker als optische Verstärker verwendet werden, deren Pumplicht vom jeweils zugehörigen Teilnehmer zur Vorfeldeinrichtung gesendet wird.

Auch eine Abwandlung, bei der zu den Teilnehmern statt Lichtwellenleitern elektrische Leiter, z.B. Koaxialleitungen führen und die Vorfeldeinrichtung Optisch-elektrisch-Wandler und Elektrisch-optisch-Wandler enthält, gehört zur Erfindung.

Schließlich ist es auch möglich, durch Verwendung von weiteren Wellenlängenmultiplexern und -demultiplexern die Zahl der zu einem Teilnehmer geführten Lichtwellenleiter zu verringern.

Ein Beispiel hierfür ist in Fig. 3 gezeigt. Für den Teilnehmer $Tln_1$ enthält die Vorfeldeinrichtung einen Wellenlängenduplexer $D_1$, der das zum Teilnehmer $Tln_1$ zu übertragende optische Signal mit der Wellenlänge $\lambda_1$ auf den mit einem Wellenlängenmultiplexer/-demultiplexer $MA_1$ verbundenen Ausgang gibt und der ein von $MA_1$ empfangenes optisches Signal mit der Wellenlänge $\lambda_9$ zur weiteren Übertragung in Aufwärtsrichtung auf einen Eingang des in Fig. 1 gezeigten Multiplexers-Demultiplexers 25 gibt. Der Multiplexer-Demultiplexer $MA_1$ fügt dem zum Teilnehmer $Tln_1$ übertragenden optischen Signal mit der Wellenlänge $\lambda_1$ das zu diesem Teilnehmer zu übertragende optische Signal mit der Wellenlänge $\lambda_0$ hinzu und gibt in Abwärtsrichtung das von diesem Teilnehmer empfangene optische Signal mit der Wellenlänge $\lambda_9$ auf seinen mit $D_1$ verbundenen Ausgang. Somit ist die Vorfeldeinrichtung mit dem Teilnehmer $Tln_1$ über einen einzigen Lichtwellenleiter $L_1$ verbunden, über den in Abwärtsrichtung die Signale mit den Wellenlängen $\lambda_0$ und $\lambda_1$ und in Aufwärtsrichtung das Signal mit der Wellenlange $\lambda_9$ übertragen werden. Der Teilnehmer hat einen Multiplexer-Demultiplexer $MB_1$, der in Abwärtsrichtung $\lambda_0$ von $\lambda_1$ trennt und in Aufwärtsrichtung das Signal mit der Wellenlänge $\lambda_9$ auf den Lichtwellenleiter $L_1$ gibt. Wie bei Fig. 1 hat der Teilnehmer für $\lambda_1$ und $\lambda_0$ je einen Optisch-elektrisch-Wandler $UA_1$ bzw. UK und einen Elektrisch-optisch-Wandler $UB_1$.

Anstelle von D 1 und MA 1 kann auch ein einziger Wellenläng-Multiplexer/Demultiplexer (3-MULDEX) verwendet werden, der die Funktion beider hat und in der Funktion dem Multiplexer/Demultiplexer $MB_1$ mit umgekehrter Richtung entspricht.

Entsprechende Multiplexer-Demultiplexer sind in der Vorfeldeinrichtung für die anderen Teilnehmer und auch bei diesen selbst vorhanden. Für den Teilnehmer $Tln_8$ sind sie gezeigt und entsprechend, nur mit dem anderen Index, bezeichnet. Wie oben im Zusammenhang mit der Erläuterung der Wahl der Wellenlängen schon erwähnt, können für die Teilnehmer und bei den Teilnehmern trotz der individuellen Wellenlängen einheitliche Multiplexer-Demultiplexer verwendet werden.

Ob, wie in Fig. 1 gezeigt, mehrere Lichtwellenleiter pro Teilnehmer oder, wie in Fig. 3 gezeigt, ein Lichtwellenleiter pro Teilnehmer und zugehörige Multiplexer-Demultiplexer verwendet werden, hängt von den Kosten der Multiplexer-Demultiplexer im Verhältnis zu den Kosten der Lichtwellenleiter ab. Möglich ist es auch, für den Verteildienst, d.h. das optische Signal mit der Wellenlänge $\lambda_0$, einen eigenen Lichtwellenleiter pro Teilnehmer vorzusehen und über einen zweiten pro Teilnehmer vorhandenen Lichtwellenleiter die optischen Signale für die Dialogdienste in Auf- und Abwärtsrichtung im Wellenlängenduplex zu übertragen.

Für jede der beschriebenen Varianten hat das erfindungsgemäße System den Vorteil, daß die Verteil-und die Dialogdienste elektrisch voneinander getrennt und nur optisch miteinander verknüpft sind, und zwar derart, daß die Verknüpfung mit einfachen optischen Mitteln bewerkstelligt und aufgelöst werden kann. Auf diese Weise ist es möglich, die Übertragungseinrichtungen für die Verteildienste und die Übertragungseinrichtungen für die Dialogdienste unabhängig voneinander einzuführen, so daß sich die Verbreitung und die Akzeptanz der verschiedenen Dienste, z.B. in einem zukünftigen integrierten Breitband-Fernmelde-Netz (IBFN), unterschiedlich entwickeln kann.

**Ansprüche**

1. Optisches Nachrichtenübertragungssystem zur doppeltgerichteten Übertragung von teilnehmerindividuellen Nachrichtensignalen zwischen einer Zentrale (10) und mehreren Teilnehmern,
- bei dem für jeweils eine Gruppe von Teilnehmern (Tln$_1$ bis Tln$_8$) eine gemeinsame und in ihrer Nähe befindliche Vorfeldeinrichtung (20) vorhanden ist,
- bei dem die von der Zentrale (10) zu der Gruppe von Teilnehmern (Tln$_1$ bis Tln$_8$) zu übertragenden teilnehmerindividuellen Nachrichtensignale zunächst über einen einzigen Lichtwellenleiter (1) im Wellenlängenmultiplex mit teilnehmerindividuellen Wellenlängen ($\lambda_1$ bis $\lambda_8$) zur Vorfeldeinrichtung (20) übertragen werden,
- bei dem in der Vorfeldeinrichtung das von der Zentrale empfangene Wellenlängenmultiplex-Signal mit optischen Mitteln (25) in einzelne optische Signale mit den teilnehmerindividuellen Wellenlängen aufgeteilt wird,
- bei dem diese optischen Signale von der Vorfeldeinrichtung (20) zu den Teilnehmern (Tln$_1$ bis Tln$_8$) über teilnehmerindividuelle Leitungen (LA$_1$ bis LA$_8$) übertragen werden und
- bei dem die von der Gruppe von Teilnehmern (Tln$_1$ bis Tln$_8$) zur Zentrale (10) zu übertragenden teilnehmerindividuellen Nachrichtensignale zunächst über teilnehmerindividuelle Leitungen (LB$_1$ bis LB$_8$) zur Vorfeldeinrichtung und von dort über denselben Lichtwellenleiter (1) im Wellenlängenmultiplex mit teilnehmerindividuellen Wellenlängen zur Zentrale (10) übertragen werden,
**dadurch gekennzeichnet,**
- daß unter Verwendung einer weiteren Wellenlänge ($\lambda_0$), die allen Teilnehmern gemeinsam ist, ein Signalgemisch, das von der Zentrale zu den Teilnehmern zu verteilende Signale, vorzugsweise Fernsehsignale, enthält, über denselben Lichtwellenleiter (1) von der Zentrale (10) zur Vorfeldeinrichtung (20) übertragen wird, dort aus dem Gemisch von optischen Signalen verschiedener Wellenlängen herausgetrennt und mit optischen Mitteln (22) und teilnehmerindividuellen Leitungen (LK$_1$ bis LK$_8$) zu den Teilnehmern (Tln$_1$ bis Tln$_8$) der Gruppe verteilt wird,
- daß der Wellenlängenbereich (W1, W2), in dem die teilnehmerindividuellen Wellenlängen ($\lambda_1$ bis $\lambda_{16}$) liegen, deutlich abgesetzt ist von dem Wellenlängenbereich, in dem die weitere Wellenlänge ($\lambda_0$) liegt,
- daß die für die Übertragung von der Zentrale (10) zu den Teilnehmern verwendeten teilnehmerindividuellen Wellenlängen ($\lambda_1$ bis $\lambda_8$) in einem ersten Wellenlängenbereich (W1) und die für die Übertragung von den Teilnehmern zur Zentrale verwendeten teilnehmerindividuellen Wellenlängen ($\lambda_9$ bis $\lambda_{16}$) in einem zweiten Wellenlängenbereich (W2) liegen, wobei zwischen den beiden Bereichen ein vorgegebener Abstand besteht, und
- daß in jedem der beiden Wellenlängenbereiche (W1, W2) die benachbarten Wellenlängen einen geringen Abstand, vorzugsweise nur wenige nm, voneinander haben.

2. System nach Anspruch 1, dadurch gekennzeichnet, daß die beiden die teilnehmerindividuellen Wellenlängen ($\lambda_1$ bis $\lambda_{16}$) enthaltenden Wellenlängenbereiche zum 1300 nm-Bereich und der Bereich, in dem die weitere Wellenlänge ($\lambda_0$) liegt, zum 1500 nm-Bereich gehören, oder umgekehrt.

3. System nach Anspruch 2, dadurch gekennzeichnet, daß in jedem der die teilnehmerindividuellen Wellenlängen ($\lambda_1$ bis $\lambda_{16}$) enthaltenden Wellenlängenbeeiche (W1, W2) die benachbarten Wellenlängen nur um 1 bis 5 nm und die beiden Wellenlängenbereiche (W1, W2) um 20 bis 80 nm auseinanderliegen.

4. System nach einem der vorstehenden Ansprüche, dadurch gekennzeichnet, daß die teilnehmerindividuellen Leitungen drei Lichtwellenleiter (LK$_1$, LA$_1$, LB$_1$ bis LK$_8$, LA$_8$, LB$_8$) pro Teilenehmer (Tln$_1$ bis Tln$_8$) sind (Fig. 1).

5. System nach einem der Ansprüche 1 bis 3, dadurch gekennzeichnet, daß die teilnehmerindividuelle Leitungen elektrische Leitungen sind.

6. System nach einem der Ansprüche 1 bis 3, dadurch gekennzeichnet, daß die teilnehmerindividuellen Leitungen ein einziger Lichtwellenleiter (L$_1$ bis L$_8$) pro Teilnehmer (Tln$_1$ bis Tln$_8$) sind und daß in der Vorfeldeinrichtung (20) und bei den Teilnehmern, optische Multiplexer-Demultiplexer (D$_1$, MA$_1$, MB$_1$ bis D$_8$, MA$_8$, MB$_8$) vorhanden sind, die eine Wellenmultiplex-Übertragung der verschiedenen optischen Signale zwischen der Vorfeldeinrichtung (20) und den Teilnehmern über den pro Teilnehmer einzigen Lichtwellenleiter (L$_1$ bis L$_8$) ermöglichen (Fig. 2).

7. System nach einem der Ansprüche 1 bis 3, dadurch gekennzeichnet, daß die teilnehmerindividuellen Leitungen zwei Lichtwellenleiter pro Teilnehmer sind, daß über den einen das die zu den Teilnehmern zu verteilenden Signale enthaltende optische Signal mit der weiteren Wellenlänge ($\lambda_0$) übertragen wird, und daß in der Vorfeldeinrichtung (20) und bei den Teilnehmern optische Duplexer vorhanden sind, die eine Duplex-Übertragung der verschiedenen optischen Signale zwischen der Vorfeldeinrichtung (20) und dem Teilnehmer über den anderen Lichtwellenleiter ermöglichen.

FIG.1

EP 0 394 728 A2

FIG.2

$\lambda$

W1
1273nm
$\lambda_1$
$\lambda_8$
1287

W2
1313
1327
$\lambda_9$
$\lambda_{16}$

FIG.3

Tln$_1$

MB$_1$
$\lambda_0$ — O/E — UK — KTV
$\lambda_1$ — O/E — UA$_1$
$\lambda_9$ — O/E — UB$_1$ } B-ISDN

$\lambda_0, \lambda_1$

Tln$_8$

MB8
$\lambda_0$
$\lambda_8$
$\lambda_{16}$

$\lambda_0, \lambda_8$

$\lambda_{16}$

L$_8$

L$_1$
$\lambda_9$
MA8
$\lambda_8$
$\lambda_{16}$

MA$_1$
$\lambda_1$
$\lambda_9$

D$_1$
$\lambda_9$

D8
$\lambda_{16}$

$\lambda_0$
$\lambda_0$
$\lambda_1$
$\lambda_8$
$\lambda_9$
$\lambda_{16}$